(19) Europäisches Patentamt / European Patent Office / Office européen des brevets

(11) **EP 4 202 387 B1**

(12) **FASCICULE DE BREVET EUROPEEN**

(45) Date de publication et mention
de la délivrance du brevet:
**29.05.2024   Bulletin 2024/22**

(21) Numéro de dépôt: **22210604.9**

(22) Date de dépôt: **30.11.2022**

(51) Classification Internationale des Brevets (IPC):
**G01L 1/10** *(2006.01)*        **G01L 1/25** *(2006.01)*
**G01L 5/24** *(2006.01)*        **G01L 9/02** *(2006.01)*
**G01L 11/04** *(2006.01)*        **H04B 11/00** *(2006.01)*
**G01L 9/00** *(2006.01)*

(52) Classification Coopérative des Brevets (CPC):
**G01L 5/243; G01L 1/10; G01L 1/255; G01L 5/246;
G01L 9/0001; G01L 9/02; G01L 11/04**

(54) **PROCEDE ET SYSTEME DE DETERMINATION DE L'ETAT D'UN CAPTEUR DONT LE COMPORTEMENT MECANIQUE EST NON LINEAIRE EN FONCTION DE L'AMPLITUDE DE LA PRESSION EXERCEE**

VERFAHREN UND SYSTEM ZUR BESTIMMUNG DES ZUSTANDS EINES SENSORS MIT NICHTLINEAREM MECHANISCHEN VERHALTEN BASIEREND AUF DER DRUCKAMPLITUDE

METHOD AND SYSTEM FOR DETERMINING THE CONDITION OF A SENSOR HAVING A NON-LINEAR MECHANICAL BEHAVIOR BASED ON THE MAGNITUDE OF THE EXERTED PRESSURE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.12.2021   FR 2114427**

(43) Date de publication de la demande:
**28.06.2023   Bulletin 2023/26**

(73) Titulaire: **Commissariat à l'énergie atomique et aux énergies alternatives
75015 Paris (FR)**

(72) Inventeur: **DESPESSE, Ghislain
38054 GRENOBLE Cedex 09 (FR)**

(74) Mandataire: **Atout PI Laplace
Immeuble Up On
25 Boulevard Romain Rolland
CS 40072
75685 Paris Cedex 14 (FR)**

(56) Documents cités:
**FR-A1- 2 739 925        FR-A1- 2 771 506
US-A- 4 604 898        US-A1- 2010 010 750
US-A1- 2011 132 098**

EP 4 202 387 B1

## Description

### Domaine technique

L'invention concerne de manière générale les systèmes de mesure, et en particulier un procédé et un système de détermination de l'état d'un capteur à travers un support.

Dans certains domaines, des systèmes de mesure sont utilisés pour effectuer des mesures à travers un support conducteur ou une paroi conductrice, telle qu'une canalisation, dans un milieu difficile d'accès, dangereux, corrosif ou hostile, et de rendre cette donnée accessible. De tels systèmes de mesure utilisent classiquement un capteur.

Cependant, le milieu où se trouve le capteur peut être difficile d'accès (par exemple l'intérieur d'une coque de bateau, d'un bloc de béton, d'un bloc de métal, de canalisations, de cuves). Il peut donc être, dans certains cas, difficile d'utiliser des capteurs actifs alimentés par des piles ou par des batteries, qui nécessitent d'être changés ou chargés régulièrement.

Il est connu d'utiliser des dispositifs passifs de radio-identification (ou RFID pour « Radio Frequency Identification »), dans lesquels des mesures issues d'un capteur sont mémorisées et récupérées à distance en utilisant des marqueurs appelés « radio-étiquettes ». Toutefois, la technologie RFID ne fonctionne pas lorsque le support séparant le système d'interrogation du capteur et le capteur lui-même est conducteur.

Par ailleurs, les dimensions des antennes radio peuvent rendre délicate leur intégration dans le milieu. En effet, la longueur d'onde d'une onde acoustique est drastiquement plus courte qu'une onde radio (facteur <1/1000), ce qui permet de réaliser des systèmes d'interrogation beaucoup plus compacts. Les dimensions des systèmes d'interrogation sont typiquement de l'ordre d'une longueur d'onde ou de quelques longueurs d'onde.

Dans les systèmes d'interrogation fonctionnant avec des ondes radio, le milieu de transmission (l'air, le vide) peut être considéré homogène et quasi infini, et il n'interagit que très peu avec le signal.

En revanche, dans les systèmes d'interrogation fonctionnant avec des ondes acoustiques, le milieu interagit fortement avec le signal. En effet, la vitesse de propagation dépend des matériaux, le milieu n'étant pas infini, et il peut y avoir de nombreux échos non maitrisés.

Une solution connue, décrite dans le document US 5 594 705, divulgue un transformateur acoustique pour coupler de l'énergie à travers un support (par exemple une coque de bateau). Le transformateur acoustique comprend un premier transducteur couplé au support, un deuxième transducteur couplé au support, à l'opposé du premier transducteur, un générateur couplé au premier transducteur pour appliquer un signal alternatif, et des moyens pour faire varier la charge du côté du deuxième transducteur, afin d'induire des variations dans le signal alternatif aux bornes du premier transducteur.

Une telle solution utilise la communication en modulation de charge. En effet, le moyen pour faire varier la charge du côté du deuxième transducteur doit être alimenté par un circuit électronique, qui interprète alors une information capteur et la traduit en une modulation de charge. Un tel dispositif ne contient pas de batterie mais nécessite un circuit actif (modulateur) qui interroge un capteur et transforme la donnée mesurée en un signal de modulation.

D'autres solutions passives existent dans le domaine RF. Les propriétés du capteur sont alors directement modifiées par le paramètre physique à mesurer (antenne capteur).

Par exemple, il est connu qu'une résistance variable peut être insérée dans le capteur pour obtenir une thermistance dont la résistance varie avec la température, ou une jauge de contrainte dont la résistance varie en fonction d'une déformation/contrainte.

Il est également connu d'insérer une capacité variable dans le capteur pour obtenir un accéléromètre capacitif (capacité qui dépend de l'accélération), une capacité avec des propriétés du diélectrique qui dépendent de la température/contrainte, ou encore un capteur capacitif (capteur de proximité, mesure de distance, mesure de position, mesure de présence, mesure de remplissage d'un liquide).

Un résonateur peut également être inséré dans le capteur pour détecter un changement de fréquence de résonance avec la température ou la contrainte mécanique, qui changent la réponse en fréquence de l'antenne. Un tel fonctionnement est utilisé classiquement dans les capteurs à ondes acoustiques de surface (capteurs SAW pour Surface Acoustic Wave).

Ce type d'antenne capteur fournit sensiblement la même réponse vue par l'interrogateur RF, quel que soit l'environnement, à partir du moment où cet environnement n'est pas conducteur électrique.

Cependant, dans le domaine des interrogateurs acoustiques, il n'est pas possible de faire une telle hypothèse. En effet, l'onde acoustique ne se propage pas dans le vide et dans l'air car les niveaux d'énergie transmissible sont faibles au regard de ce qui peut être transmis au travers de solides ou de liquides.

De ce fait, la propagation acoustique est très dépendante des matériaux physiques en présence. Les hypothèses d'un milieu connu, isotrope et quasi-infini ne sont plus valables. La déformation du signal liée à ce canal ne peut plus être prédéterminée de manière générique, et il est nécessaire de modéliser chaque situation pour en déduire l'effet du canal dans chacun des cas et ainsi remonter à un changement propre d'une des propriétés du capteur acoustique.

Le document US 2010/010750 A1 se rapporte à un capteur acoustique pour la mesure d'un paramètre physique sur un gaz dans une enceinte.

Le document FR 2 739 925 A1 se rapporte à un capteur acoustique pour la mesure d'un paramètre physique sur une enceinte remplie d'un fluide.

Le document US 4 604 898 se rapporte à un dispositif de mesure de pression, dans lequel on exploite la modification de la fréquence de résonance d'un capteur à cavité résonante.

Le document US 2011/132098 A1 se rapporte à une jauge de contrainte de type structure résonante acoustique comportant un transducteur piézo-électrique.

Le document FR 2 771 506 A1 se rapporte à un procédé de détermination de l'effort de serrage d'au moins un organe de serrage de deux éléments.

Il existe ainsi un besoin pour des procédés et des systèmes de détermination de l'état d'un capteur par un mode d'interrogation acoustique passif, qui ne nécessite pas de caractériser le canal de propagation.

**Résumé de l'invention**

L'invention vise à remédier aux inconvénients précités, en proposant un procédé flexible et simple d'utilisation.

Un objet de l'invention est donc un procédé de détermination de l'état d'au moins un capteur dont le comportement mécanique est non linéaire en fonction de l'amplitude de la pression exercée contre ledit capteur, le procédé étant un procédé selon la revendication indépendante 1.

Avantageusement, le capteur comprend au moins un entrefer, l'étape de détermination d'un état du capteur comprenant une détermination de la valeur d'entrefer, et dans lequel :

- la valeur d'entrefer est considérée comme étant nulle si l'écart entre le premier ensemble de valeurs et le deuxième ensemble de valeurs est inférieur à une valeur d'écart prédéterminée ;
- la valeur d'entrefer est considérée comme non nulle si l'écart entre le premier ensemble de valeurs et le deuxième ensemble de valeurs est supérieure à ladite valeur d'écart prédéterminée.

Avantageusement, le capteur comprend au moins un entrefer, le procédé comprenant les étapes consistant à :

- déterminer une première valeur d'un paramètre caractéristique de l'impédance électrique du premier transducteur électromécanique, à la première amplitude,
- déterminer une deuxième valeur d'un paramètre caractéristique de l'impédance électrique du premier transducteur électromécanique, à la deuxième amplitude, la première valeur et la deuxième valeur étant telles que l'écart soit non nul,
- appliquer le signal électrique à une troisième amplitude, la troisième amplitude étant comprise entre la première amplitude et la deuxième amplitude, et déterminer une troisième valeur d'un paramètre caractéristique de l'impédance électrique du premier transducteur électromécanique, à la troisième amplitude,
- déterminer la valeur d'entrefer en fonction de la première valeur, de la deuxième valeur, et de la troisième valeur.

L'invention se rapporte également à un procédé de détermination du niveau de serrage de pièces mécaniques disposées entre une première tête de serrage et une deuxième tête de serrage, un capteur dont le comportement mécanique est non linéaire en fonction de l'amplitude de la pression exercée contre ledit capteur étant disposé entre les têtes de serrage, le procédé étant un procédé selon la revendication indépendante 4.

Avantageusement, la première tête de serrage est une tête de vis, la deuxième tête de serrage est un écrou, et le capteur est intégré dans une rondelle.

L'invention se rapporte également à un système de détermination de l'état d'au moins un capteur dont le comportement mécanique est non linéaire en fonction de l'amplitude de la pression exercée contre ledit capteur, le système étant un système selon la revendication indépendante 6.

Avantageusement, le capteur comprend au moins un entrefer.

Avantageusement, ledit au moins un entrefer est réalisé sous forme de motif répété disjoint.

Avantageusement, le capteur comprend un premier entrefer et un deuxième entrefer, le premier entrefer et le deuxième entrefer ayant tous deux un profil rectiligne ou un profil incurvé, le premier entrefer et le deuxième entrefer étant superposés, le premier entrefer et le deuxième entrefer comprenant des espacements inter-plaques différents.

Avantageusement, le capteur comprend un premier entrefer et un deuxième entrefer, le premier entrefer et le deuxième entrefer ayant tous deux un profil rectiligne, le premier entrefer et le deuxième entrefer étant alignés, le premier entrefer et le deuxième entrefer comprenant des espacements inter-plaques différents.

Avantageusement le capteur comprend un premier entrefer et un deuxième entrefer, le premier entrefer et le deuxième entrefer ayant tous deux un profil rectiligne ou un profil incurvé, le premier entrefer et le deuxième entrefer étant superposés et suffisamment proches l'un par rapport à l'autre, de façon à ce que qu'ils forment une membrane dont l'épaisseur est inférieure à la longueur d'onde de l'onde acoustique se propageant dans le capteur.

Avantageusement, le capteur comprend un entrefer ayant un profil dont l'épaisseur varie progressivement.

Avantageusement, le capteur comprend un entrefer ayant un profil crénelé, la hauteur d'au moins une partie des créneaux étant variable.

Avantageusement, le capteur comprend un premier entrefer et un deuxième entrefer, réalisés sous forme de motif répété, le premier entrefer et le deuxième entrefer étant superposés, le bord de chaque motif du premier entrefer étant aligné avec le centre d'un motif du deuxième entrefer, et réciproquement.

Avantageusement, le motif comprend une partie d'entrefer rectiligne, apte à être mise en contact lorsqu'une pression est exercée contre le capteur, et deux piliers disposés de part et d'autre de la partie d'entrefer rectiligne, perpendiculaires à ladite partie d'entrefer.

Avantageusement le capteur est un capteur de force, ou une jauge de contrainte, ou un capteur de pression de gaz, ou un capteur de liquide, ou un capteur de température, ou un capteur d'humidité.

## Description des figures

D'autres caractéristiques, détails et avantages de l'invention ressortiront à la lecture de la description faite en référence aux dessins annexés donnés à titre d'exemple.

La figure 1 est un schéma représentant un système selon l'invention.

La figure 2 est un organigramme représentant un procédé selon l'invention.

La figure 3 est un graphe représentant une évolution du module et de l'argument de l'impédance vue par le transducteur, pour deux amplitudes du signal électrique.

La figure 4 est un graphe représentant l'évolution de l'impédance vue par le transducteur, pour différentes valeurs d'amplitude du signal électrique.

La figure 5 illustre un système pour mettre en oeuvre le procédé de détermination du niveau de serrage de pièces mécaniques selon l'invention.

Les figures 6 à 14 illustrent différents profils de capteur à entrefer utilisés dans le système selon l'invention.

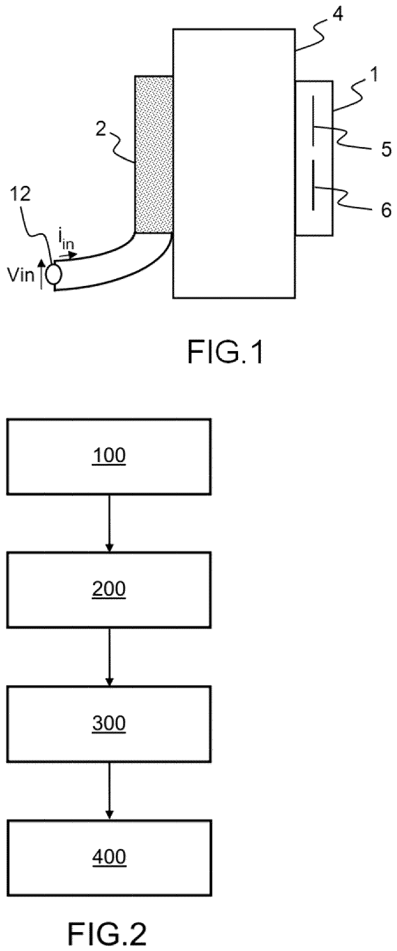

La figure 1 illustre la configuration dans laquelle le procédé peut s'appliquer. Un transducteur électromécanique 2 et un capteur 1 dont le comportement électrique est non linéaire en fonction de la pression exercée contre le capteur sont disposés de part et d'autre d'un support 4. D'autres configurations sont envisageables, par exemple le capteur 1 est disposé sur le même côté du support que le transducteur électromécanique 2, mais à un endroit inaccessible. Le support est une pièce mécanique rigide, dans laquelle peut se propager une onde vibratoire générée par un des transducteurs électromécaniques.

Le transducteur électromécanique 2 et le capteur 1 sont couplés au support 4 de façon à ce que la propagation de l'onde vibratoire entre les transducteurs soit optimale. Le transducteur électromécanique 2 et le capteur 1 peuvent par exemple être fixés par collage au support 4, ou par exemple via des pattes de fixation ou maintenus en contact par la force magnétique d'un aimant ou encore, du côté du transducteur électromécanique 2, maintenus en contact par une pression exercée par l'utilisateur.

Sur la figure 1, le support a des dimensions proches de celles du transducteur électromécanique 2 et du capteur 1, mais l'invention peut s'appliquer à des supports de longueurs variables, allant par exemple d'une petite pièce mécanique de type pièce de moteur, à une très grande pièce telle qu'une canalisation.

Dans le cas d'une pièce de type canalisation, il est entendu que le capteur 1 est disposé à l'intérieur de la canalisation, à un endroit difficile d'accès. Le capteur 1 peut aussi être disposé à l'extérieur, à un endroit éloigné difficile d'accès (intérieur d'un forage, dans une cuve contenant un liquide, ou encore dans une conduite forcée qui peut être sur une paroi raide et difficile d'accès, par exemple en montagne). Dans ce cas, il peut être intéressant de pouvoir interroger des capteurs éloignés à partir de points où la conduite est accessible facilement.).

Le transducteur électromécanique 2 et le capteur 1 sont disposés de préférence de façon à se faire face au travers du support 4, afin d'optimiser la transmission de puissance entre le transducteur électromécanique 2 et le capteur 1.

L'invention s'applique particulièrement à des supports 4 métalliques, pour lesquelles l'interrogation par RFID n'est pas fiable. Toutefois, l'invention peut être étendue à tout type de support 4, sans limitation liée au matériau.

Le transducteur électromécanique est conçu pour recevoir de l'énergie d'un système électrique et fournir de l'énergie à un système mécanique, ou réciproquement. Le transducteur électromécanique peut avantageusement être un transducteur électroacoustique, et plus particulièrement un transducteur piézoélectrique. Les transducteurs piézoélectriques comprennent un matériau électro-actif qui induit une tension lorsqu'une pression ou une contrainte lui est appliquée, et réciproquement. D'autres transducteurs électromécaniques peuvent être envisagés, par exemple les transducteurs électrostatiques à électret, ou les transducteurs électromagnétiques.

Par « capteur dont le comportement mécanique est non linéaire en fonction de la pression exercée contre ledit capteur », on entend un élément dont le comportement mécanique est fondamentalement différent suivant la valeur de la pression exercée contre le capteur.

L'idée à la base de l'invention est de pouvoir mesurer l'état d'un capteur à distance via une mesure différentielle d'impédance électrique d'un transducteur électromécanique, à partir d'au moins deux mesures d'impédance électrique à deux amplitudes différentes.

Il est rappelé que l'impédance électrique mesure l'opposition d'un circuit électrique au passage d'un courant alternatif sinusoïdal.

Une unité de détermination d'état de capteur 12, comprenant une source de tension, ou une source de courant, est connectée électriquement au transducteur électromécanique 2, de façon à imposer respectivement une tension sinusoïdale à une amplitude maximale prédéfinie, ou un courant sinusoïdal à une amplitude maximale prédéfinie, aux autres éléments du système.

La mesure de l'impédance peut être effectuée par un dispositif de mesure d'impédance, également appelé impédancemètre, qui peut être intégré à l'unité 12 de détermination d'état de capteur. Selon une variante, la mesure de l'impédance peut être effectuée dans un dispositif de calcul distinct de la source de tension ou de courant, par exemple dans un ordinateur.

L'impédance électrique du transducteur électromécanique 2 correspond donc à celle qui est « vue » par l'unité 12 de détermination.

Pour les différents modes de réalisation décrits ci-après, il est possible d'imposer une tension Vin à l'aide d'une source de tension, et de mesurer le courant $I_{in}$ afin de déterminer l'impédance. Il est également possible d'imposer une intensité $I_{in}$ à l'aide d'une source de courant, et de mesurer la tension Vin afin de déterminer l'impédance. La notion d'amplitude de la mesure peut s'appliquer aussi bien à $I_{in}$ qu'à Vin.

Le procédé comprend, dans une première étape 100 (figure 2), d'appliquer un signal électrique à une première amplitude aux bornes du premier transducteur électromécanique 2, et de déterminer un premier ensemble de valeurs d'un paramètre caractéristique de l'impédance du transducteur électromécanique 2 en réponse à l'application dudit signal électrique.

La bande de fréquence du signal électrique est de préférence située autour de la fréquence d'un mode de résonance du transducteur électromécanique 2.

Dans une deuxième étape 200 (figure 2), le signal électrique est appliqué à une deuxième amplitude, et un deuxième ensemble de valeurs du paramètre caractéristique de l'impédance est déterminé.

L'information liée à l'état du capteur 1 est codée dans la non linéarité de l'impédance du capteur 1 en fonction de l'amplitude du signal de mesure imposée par la source de tension ou de courant.

C'est le comportement du capteur 1, mis en mouvement via le support 4, qui en retour de cette mise en mouvement, présente une contre-réaction mécanique non linéaire avec l'amplitude.

Le canal de propagation est considéré comme linéaire avec l'amplitude du signal émis, contrairement au capteur 1, ce qui permet de discriminer les propriétés non linéaires du capteur 1 vis-à-vis du canal.

Dans une troisième étape 300 du procédé (figure 2), un écart entre le premier ensemble de valeurs et le deuxième ensemble de valeurs est mesuré, selon un des critères de proximité définis ci-après. L'écart correspond à une différence entre deux ensembles de valeurs, selon un critère prédéfini.

Ainsi, en sélectionnant de façon appropriée la première et la deuxième amplitude, l'état du capteur 1 peut être déterminé en fonction de l'écart entre le premier ensemble de valeurs et le deuxième ensemble de valeurs (quatrième étape 400).

Le procédé peut être répété de façon périodique, afin d'évaluer régulièrement l'état du capteur 1. Il peut, en alternative ou en complément, être implémenté ponctuellement, par exemple en cas de mesure aberrante du capteur 1.

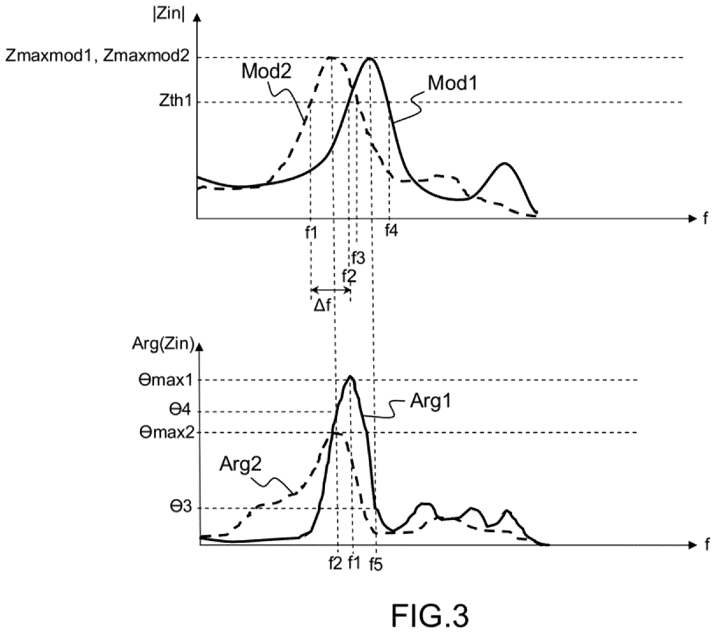

La figure 3 illustre deux mesures permettant de caractériser l'impédance, à savoir le module (partie supérieure de la figure 3), et l'argument (partie inférieure de la figure 3). Le module correspond au rapport entre l'amplitude de la tension et l'amplitude du courant, et l'argument correspond à la différence entre la valeur de phase de la tension et la valeur de phase du courant.

La courbe Mod1 correspond à une pluralité de mesures du module de l'impédance vue par le transducteur électromécanique 2, pour différentes fréquences du signal, à une première amplitude. Pour un signal sinusoïdal, ou plus généralement pour un signal alternatif, l'amplitude correspond à la valeur de crête du signal, c'est-à-dire la valeur maximale. La courbe Mod2 correspond à une pluralité de mesures du module de l'impédance vue par le transducteur électromécanique 2, pour différentes fréquences du signal, à une deuxième amplitude, différente de la première amplitude.

Il est possible, par exemple, d'effectuer les mesures pour un ensemble fini de fréquences, et d'effectuer ensuite une opération d'interpolation, afin d'obtenir un ensemble continu de valeurs, sur une plage de fréquences prédéterminée.

La plage de fréquence de mesure est prédéfinie, et peut être par exemple déterminée en fonction des propriétés du premier transducteur électromécanique 2 et/ou du capteur 1.

La courbe Arg1 correspond à une pluralité de mesures de l'argument de l'impédance vue par le transducteur électromécanique 2, pour différentes fréquences du signal, à la première amplitude. La courbe Arg2 correspond à une pluralité de mesures de l'argument de l'impédance vue par le premier transducteur électromécanique 2, pour différentes fréquences du signal, à la deuxième amplitude.

Il n'est pas nécessaire, pour mettre en oeuvre le procédé selon l'invention, de mesurer le module et l'argument. L'une des deux mesures peut suffire ; cela dépend de la définition de l'écart, comme défini ci-après.

Selon un premier mode de réalisation, la mesure de l'écart entre le premier ensemble de valeurs et le deuxième ensemble de valeurs comprend la mesure d'un écart de fréquences entre les passages par une valeur de module d'impédance prédéfinie ou par une valeur d'argument d'impédance prédéfinie du premier ensemble de valeurs et du deuxième ensemble de valeurs.

La partie supérieure de la figure 3 illustre le mode de réalisation précité, avec une valeur de module d'impédance prédéfinie Zth1. L'ensemble de valeurs Mod1 à la première amplitude atteint la valeur Zth1 pour les fréquences f2 et f4. L'ensemble de valeurs Mod2 à la deuxième amplitude atteint la valeur Zth1 pour les fréquences f1 et f3.

Dans un mode de réalisation, seules les fréquences correspondant au premier dépassement du seuil Zth1 sont considérées. Ainsi, selon ce mode de réalisation, l'écart entre le premier ensemble de valeurs Mod1 et le deuxième ensemble de valeurs Mod2 correspond à la différence $\Delta f = f2 - f1$.

Selon un autre mode de réalisation de calcul de l'écart entre les ensembles de valeurs, l'écart peut être défini, à l'intérieur d'une plage de fréquences prédéfini, par l'écart de fréquences entre la valeur extrêmale du premier ensemble de valeurs et la valeur extrêmale du deuxième ensemble de valeurs.

La valeur extrêmale correspond de préférence au maximum de chaque ensemble de valeurs. Sur la partie inférieure de la figure 3, le premier ensemble de valeurs de l'argument Arg1 à la première amplitude a une valeur maximale $\theta max1$, à une fréquence f1, et le deuxième ensemble de valeurs de l'argument Arg2 à la deuxième amplitude a une valeur maximale $\theta max2$, à une fréquence f2. Selon ce mode de réalisation, l'écart correspond à la différence $\Delta f = f1 - f2$.

Selon un autre mode de réalisation illustré par la partie inférieure de la figure 3, l'écart peut être calculé en mesurant, dans la plage de fréquences prédéfinie, l'écart de module ou d'argument entre l'extremum du premier ensemble de valeurs et l'extremum du deuxième ensemble de valeurs. L'extremum correspond de préférence à la valeur maximale.

Sur l'exemple de la figure 3 (partie inférieure), l'écart peut être obtenu par le calcul $\Delta\theta = \theta max1 - \theta max2$.

Selon un autre mode de réalisation, l'écart correspond à une différence d'argument entre le premier ensemble de valeurs et le deuxième ensemble de valeurs à des fréquences correspondant à un extremum (ou à une valeur prédéfinie) du module du premier ensemble de valeurs et à l'extremum (ou à une valeur prédéfinie) du module du deuxième ensemble de valeurs. L'extremum correspond de préférence au maximum de chaque ensemble de valeurs.

Par exemple, sur la partie supérieure de la figure 3, le premier ensemble de valeurs Mod1 du module à une première amplitude, et le deuxième ensemble de valeurs Mod2 du module à une deuxième amplitude, ont chacun une valeur maximale, respectivement Zmaxmod1 et Zmaxmod2, qui sont égales sur la figure 3.

La valeur Zmaxmod1 est atteinte à la fréquence f5, et la valeur Zmaxmod2 est atteinte à la fréquence f2. En supposant que le graphique de la partie supérieure et celui de la partie inférieure puissent être alignés, la valeur de l'argument du premier ensemble de valeur Arg1 à la fréquence f5 vaut $\theta3$, et la valeur de l'argument du deuxième ensemble de valeur Arg2 à la fréquence f2 vaut $\theta4$. Selon ce mode de réalisation, l'écart correspond à la différence $\Delta\theta = \theta4 - \theta3$.

Selon un autre mode de réalisation, l'écart est calculé à partir d'une intercorrélation entre les deux ensembles de mesures.

Le calcul de l'écart entre l'ensemble de valeurs à la première amplitude et l'ensemble de valeurs à la deuxième amplitude, selon l'un des modes de réalisation précités, permet de déterminer si le paramètre caractéristique de l'impédance (module ou argument) du transducteur électromécanique 2, vue par l'unité 12 de détermination d'état de capteur, en réponse à l'application dudit signal électrique, varie, ou au contraire reste sensiblement constant, selon que le signal soit appliqué avec la première ou avec la deuxième amplitude.

Le capteur 1 comprend avantageusement au moins un entrefer 5, tel que ceux que l'on peut trouver dans les dispositifs électromagnétiques et capacitifs.

Un exemple de capteur capacitif à entrefer est décrit dans l'article « A Capacitive 3-Axis MEMS Accelerometer for Medipost: A Portable System Dedicated to Monitoring Imbalance Disorders » (Michal Szermer et al., Sensors 2021, 21, 3564), en particulier à la figure 1 de l'article.

N'importe quels matériaux solides est apte à former les deux matériaux à placer de part et d'autre de l'entrefer. Pour maintenir l'entrefer, il faut généralement un support qui maintient les deux parties en place, par exemple utilisant des cales qui maintiennent les deux parties séparées avec une bonne précision sur la valeur de l'entrefer. L'entrefer lui-même est typiquement sous vide ou bien rempli d'un gaz, c'est-à-dire un élément très souple devant la raideur du/des matériaux qui forment les deux côtés de l'entrefer.

Le même principe de mesure peut être appliqué réciproquement en calculant une mesure de l'écart de module entre le premier ensemble de valeurs et le deuxième ensemble de valeurs à des fréquences correspondant à un extremum d'argument (en particulier le maximum) du premier ensemble de valeurs (ou à une valeur prédéfinie) et à un extremum d'argument (en particulier le maximum) du deuxième ensemble de valeurs (ou à une valeur prédéfinie).

En se référant à la figure 1, si la vibration du côté du capteur 1 situé contre le support 4 ne dépasse pas la valeur d'entrefer, il n'y a pas de transmission de l'onde vibratoire vers le côté opposé du capteur 1.

Si l'amplitude dépasse la valeur d'entrefer, il y aura un transfert de vibration entre le côté du capteur 1 situé contre le support 4, et le côté opposé.

Une première mesure est effectuée à faible amplitude, pour laquelle il est certain que l'entrefer ne vient pas en contact avec le support si un entrefer minimal est présent. Une deuxième mesure est effectuée à plus forte amplitude. Si l'impédance est identique, il peut être déduit que l'entrefer est tout le temps en contact avec le support. Par contre, si l'impédance est différente, il peut être déduit qu'il n'y a pas contact entre l'entrefer et le support (fonctionnement dit « tout ou rien »).

En « positionnant » une impédance Zin2 par rapport à Zin1 (absence de contact de l'entrefer) et Zin3 (contact de l'entrefer), il est également possible de déterminer une mesure linéaire de l'entrefer, par exemple :

**[0090]**    - Une valeur d'entrefer qui dépend de la température (dilatation thermique, effet bilame... )

-    une valeur d'entrefer qui dépend d'une contrainte/déformation mécanique

-    une valeur/volume d'entrefer qui dépend d'un niveau d'humidité

-    une valeur d'entrefer qui dépend d'un niveau de pression extérieure

Une mesure Mes de la valeur d'entrefer du capteur peut par exemple être déduite par des ratios relatifs, par la formule suivante :

$$\text{Mes} = \alpha.\Delta(\text{Zin2}-\text{Zin1})/\Delta(\text{Zin3}-\text{Zin1})+\beta \qquad (1)$$

Où $\Delta$ représente l'écart sur le paramètre caractéristique de l'impédance, $\alpha$ et $\beta$ sont des paramètres prédéterminés propre au capteur 1. L'écart peut être mesuré selon l'un des modes de réalisation précédemment décrits.

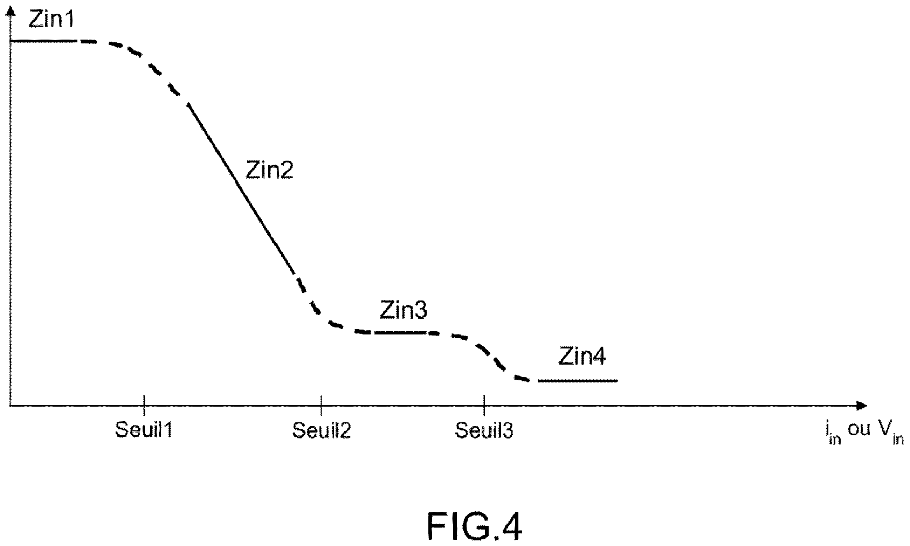

Il est possible de faire autant de mesures d'impédance Zin à autant d'amplitudes que souhaitées, par exemple pour confirmer une mesure, mais aussi pour se positionner par rapport aux seuils du/des non linéarités:
Il est par exemple possible de partir d'une amplitude de mesure très faible et de la faire monter progressivement jusqu'à obtenir un changement d'impédance et ainsi détecter une première non-linéarité, comme l'illustre par exemple la figure 4, étant entendu qu'il s'agit d'une représentation symbolique de l'impédance, qui a une composante réelle (le module) et une composante imaginaire (l'argument)

Dans le cadre du mode de réalisation précité pour déterminer la valeur d'entrefer du capteur, il est possible de continuer cette progression pour détecter une deuxième non-linéarité, et ainsi de suite pour détecter toutes les non linéarités et ainsi savoir quelle amplitude appliquer pour faire la/les bonnes mesures différentielles pour retrouver l'information du capteur physique.

Les portions en trait plein (Zin1, Zin2, Zin3, Zin4) représentent des tendances tangentielles de l'impédance du capteur 1. Quand une tendance tangentielle est inclinée, cela signifie qu'elle a une composante au moins qui dépend de l'amplitude du signal électrique aux bornes du transducteur 2 (intensité $i_{in}$ ou tension $V_{in}$). Lorsqu'elle est horizontale, elle est sensiblement constante dans la plage d'amplitude considérée.

Les portions en pointillés représentent les jonctions entre les tendances tangentielles de l'impédance du capteur 1. Il est ainsi possible de déterminer des seuils (Seuil1, Seuil2, Seuil3) de changement d'impédance.

L'information à mesurer peut être déduite des valeurs d'impédance Zin dans les zones tangentielles ou encore de la valeur des seuils Seuil1, Seuil2 ... de changement d'impédance.

Pour s'affranchir des effets du canal, le principe consiste donc à effectuer une identification relative (Seuil2, Seuil3 par rapport à Seuil1), de façon similaire à l'équation (1).

Une mesure Mes de la valeur d'entrefer du capteur peut ainsi, en variante à l'équation (1), être déduite par des ratios relatifs des seuils entre les zones tangentielles, par la formule suivante :

$$Mes = \alpha.(Seuil2\text{-}Seuil1)/(Seuil3\text{-}Seuil1)+\beta \qquad (2)$$

La détermination de l'état du capteur peut ainsi être étendue à la détermination de la valeur d'entrefer.

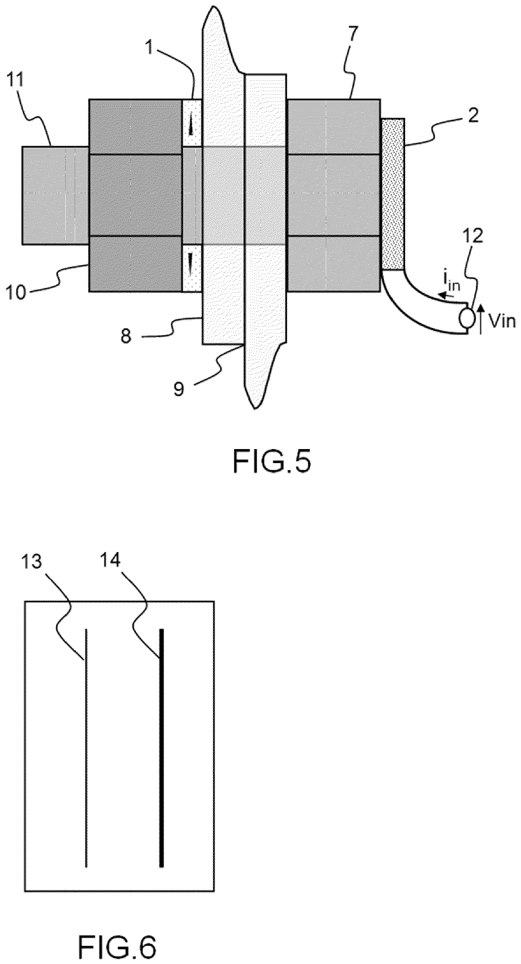

La figure 5 illustre un exemple d'application du procédé selon l'invention, à la détermination du niveau de serrage de pièces mécaniques (8, 9) disposées entre une première tête de serrage 7 et une deuxième tête de serrage 10. Un capteur 1 dont le comportement électrique est non linéaire en fonction de la pression exercée contre ledit capteur 1 étant disposé entre les têtes de serrage (7, 10). Un transducteur électromécanique 2 est couplé à une des têtes de serrage.

Selon un mode de réalisation, la première tête de serrage 7 est une tête de vis, la deuxième tête de serrage 10 est un écrou, et le capteur 1 est intégré dans une rondelle. Il est ainsi possible de mesurer l'effort de serrage de la vis.

Le capteur 1 pourrait aussi mesurer sa température, par exemple avec un entrefer supplémentaire dans une zone dépendant de la température et présentant un seuil de non-linéarité différent.

Les déplacements mécaniques étant très petits, il peut être judicieux d'utiliser des procédés très précis (de l'ordre de quelques nanomètres à quelques microns), tel que ceux utilisés en microélectronique pour fabriquer des MEMS (Micro Electro Mechanical System).

Selon des modes de réalisation, il est avantageux de déposer des couches de quelques nanomètres, avec une précision autour du nanomètre. Il est par ailleurs avantageux de mettre en oeuvre des procédés de gravure pour structurer de telles couches. Par ailleurs, il est préférable de mettre en oeuvre des procédés de collage efficaces, tel que le collage moléculaire, pour assurer une propagation efficace des ondes acoustiques.

Il est aussi possible de combiner plusieurs valeurs d'entrefer. Un des intérêts est de pouvoir créer une non linéarité de référence qui ne dépend idéalement pas du paramètre à mesurer et un second qui dépend du paramètre à mesurer. La non linéarité de référence permet alors d'identifier une amplitude de référence pour ensuite faire une mesure différentielle précise du paramètre à mesurer.

Les figures 6 à 14 illustrent différents modes de réalisation du profil du capteur 1.

Dans le mode de réalisation illustré par la figure 6, le capteur 1 comprend un premier entrefer 13 et un deuxième entrefer 14, qui ont tous deux un profil rectiligne. Le premier entrefer 13 et le deuxième entrefer 14 sont superposés, et le premier entrefer 13 et le deuxième entrefer 14 comprennent des espacements inter-plaques différents.

Si on considère un transducteur électromécanique placé à gauche, on détecte une première amplitude où l'oscillation mécanique sur la paroi gauche de l'entrefer 13 atteint la paroi de droite de cet entrefer.

Au-dessus de cette amplitude, on a une mise en vibration du côté droit de ce premier entrefer, ce qui modifie l'impédance mécanique vu par le transducteur électromécanique, et donc un changement d'impédance électrique aux bornes du transducteur.

Lorsque la plaque placée entre les deux entrefers capte et propage une certaine amplitude vibratoire, elle a sa face droite qui finit par toucher l'autre côté du second entrefer 14.

Au-delà de cette amplitude, la paroi de droite du second entrefer se met à vibrer, ce qui modifie l'impédance électrique sur le transducteur électromécanique.

Le premier entrefer 13 peut servir de référence, c'est à dire que sa valeur ne dépend pas du paramètre à mesurer. Ainsi, l'amplitude qui conduit à une mise en contact du premier entrefer défini une première amplitude de référence.

En détectant l'amplitude de mise en contact au niveau du deuxième entrefer 14 et en la comparant à l'amplitude de référence, on peut en déduire par exemple la valeur du deuxième entrefer 14.

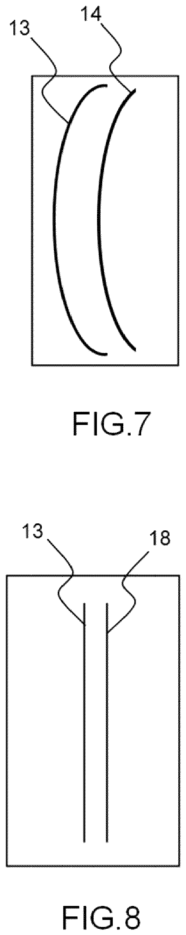

En variante, les deux profils peuvent être incurvés, comme l'illustre la figure 7, le premier entrefer 13 et le deuxième entrefer 14 comprenant des espacements inter-plaques différents.

Pour les modes de réalisation précités, il est considéré que la longueur d'onde acoustique est inférieure à l'épaisseur de chacune des couches.

Selon une variante illustrée par la figure 8, le capteur 1 comprend un premier entrefer 17 et un deuxième entrefer 18, le premier entrefer 17 et le deuxième entrefer 18 ayant tous deux un profil rectiligne. Le premier entrefer 17 et le deuxième entrefer 18 étant superposés et suffisamment proches l'un par rapport à l'autre, de façon à ce que qu'ils forment une membrane dont l'épaisseur est inférieure à la longueur d'onde de l'onde acoustique se propageant dans le capteur.

L'onde ne se propage donc plus dans l'épaisseur de la membrane, mais c'est l'ensemble de la membrane qui se déplace pour former l'équivalent d'une membrane vibrante.

La membrane est entraînée en mouvement par ses points d'accroche latéraux et est susceptible de résonner sur un ou plusieurs modes de résonance. L'amplitude d'oscillation de cette membrane est toutefois limitée en amplitude de par la valeur de l'entrefer à droite et/ou à gauche de la membrane. Cette mise en contact sur l'un au moins des deux entrefers est détectable via la détection d'un changement d'impédance sur le transducteur électromécanique 2.

La fréquence de résonance et/ou le facteur d'amplification mécanique de la membrane dépend par exemple du paramètre physique à mesurer, selon l'un ou l'autre des modes de réalisation suivants :

- pour un capteur de force ou une jauge de contrainte, la fréquence de résonance dépend de la tension mécanique sur la membrane ;
- pour un capteur de pression de gaz, l'amortissement mécanique dépend de la pression/du type de gaz présent dans le/les entrefers ;
- pour un capteur de pression de gaz, l'effet coussin d'air qui dépend de la pression/du type de gaz présent dans le/les entrefers peut modifier la fréquence de résonance en fonction de l'amplitude d'oscillation de la membrane ;
- pour un capteur de liquide, la présence d'un liquide dans l'entrefer fait plus ou moins apparaitre ou disparaitre l'effet membrane (exemple : application à la mesure d'un niveau de carburant, de présence d'huile, vérification d'étanchéité...) ;
- pour un capteur de température, la différence de dilatation thermique entre la membrane et le support a pour conséquence une modification de la pré-tension de la membrane et donc de sa fréquence de résonance ;
- pour un capteur d'humidité, une membrane constituée en un matériau qui absorbe l'humidité a sa fréquence de résonance qui change.

Par ailleurs, d'un côté de la membrane, il peut y avoir un gaz avec une pression de référence et de l'autre côté, un gaz dont on doit mesurer la pression. Selon que la pression du gaz à mesurer est supérieure ou inférieure à la pression du gaz de référence, la membrane va se décaler vers la gauche ou la droite. On peut alors mesurer la différence de comportement et tout particulièrement si la membrane va en contact à gauche ou à droite ce qui bloque toute vibration de la membrane (pas de changement d'impédance électrique avec l'amplitude).

En variante, les deux profils peuvent être incurvés. Vis-à-vis d'une tension latérale, la tension a plus pour effet de modifier le « bombé » et donc la position initiale que de seulement changer la fréquence de résonance.

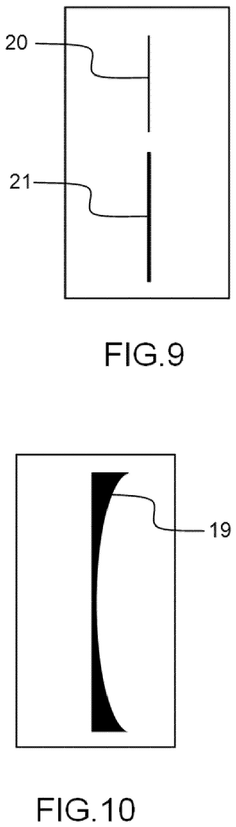

Selon un autre mode de réalisation illustré par la figure 9, le capteur 1 comprend un premier entrefer 20 et un deuxième entrefer 21 qui ont tous deux un profil rectiligne. Le premier entrefer 20 et le deuxième entrefer 21 sont alignés. Le premier entrefer 20 et le deuxième entrefer 21 comprennent des espacements inter-plaques différents.

Selon un autre mode de réalisation illustré par la figure 10, le capteur 1 comprend un entrefer 19 ayant un profil dont l'épaisseur varie progressivement. Ainsi, la surface qui rentre en contact avec l'amplitude de la vibration augmente progressivement. Par ailleurs, la surface d'entrefer initial en contact peut dépendre par exemple d'un effort de compression, ce qui permet d'avoir un capteur progressif d'effort.

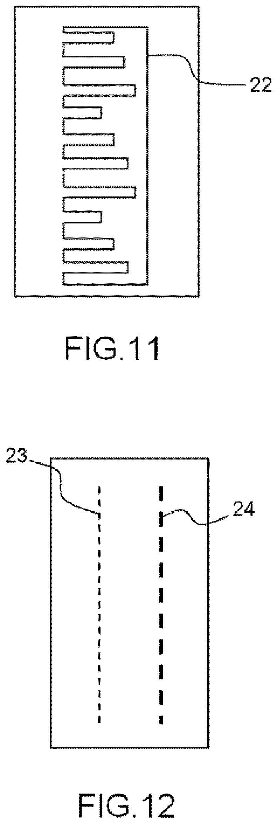

Selon un autre mode de réalisation illustré par la figure 11, le capteur 1 comprend un entrefer 22 ayant un profil crénelé, la hauteur d'au moins une partie des créneaux étant variable. L'effet est similaire au profil dont l'épaisseur varie progressivement, mais de façon discrétisée.

Selon un autre mode de réalisation illustré par la figure 12, l'entrefer est réalisé sous forme de motif répété disjoint (23, 24). Ce mode de réalisation est particulièrement utile si les besoins mécaniques nécessitent des motifs élémentaires de petite dimension.

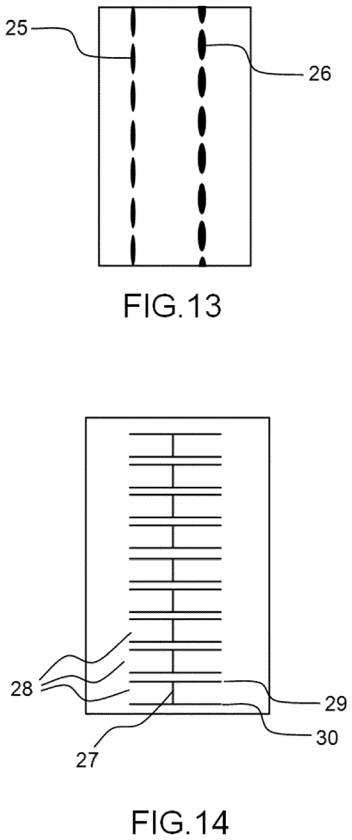

Selon un autre mode de réalisation illustré par la figure 13, le capteur 1 comprend un premier entrefer 25 et un deuxième entrefer 26, réalisés sous forme de motif répété. Le premier entrefer 25 et le deuxième entrefer 26 superposés, le bord de chaque motif du premier entrefer 25 étant aligné avec le centre d'un motif du deuxième entrefer 26, et réciproquement.

Les pièces mécaniques qui bordent les premiers entrefers sont sensiblement alignés avec les centres des zones des second entrefers et réciproquement. Ces pièces mécaniques qui bordent sont par exemple des cales distribuées ou des grilles.

Ceci a pour avantage que l'onde acoustique peut ainsi facilement se propager à travers ces pièces mécaniques pour atteindre l'autre entrefer.

La structure acquiert une bonne souplesse à travers l'épaisseur car il n'y a pas de plot rigide qui traverse et relie directement la surface de gauche à la surface de droite. Cette souplesse permet par exemple de faire un capteur d'effort ou de déformation relativement souple pour être sensible à des efforts de faible valeur.

La forme arrondie est une option pour donner un aspect progressif, mais d'autres formes sont envisageables.

Selon un autre mode de réalisation illustré par la figure 14, les différents motifs répétés constituant l'entrefer 28 comprennent chacun une partie d'entrefer rectiligne 27, apte à être mise en contact lorsqu'une pression est exercée contre le capteur, et deux piliers (29, 30) disposés de part et d'autre de la partie d'entrefer rectiligne 27, perpendiculaires à ladite partie d'entrefer.

Ce mode de réalisation permet de bénéficier de piliers allongés pour donner une certaine souplesse en élongation alors que l'entrefer est lui très faible devant la longueur de ces piliers. Si par exemple l'entrefer au repos mesure 10 µm et que les piliers mesurent 1 mm, il suffit d'une pression qui déforme de 1 % la longueur des piliers pour engendrer une mise en contact au niveau de l'entrefer.

**Revendications**

1. Procédé de détermination de l'état d'au moins un capteur (1) dont le comportement mécanique est non linéaire en fonction de l'amplitude de la pression exercée contre ledit capteur, ledit capteur (1) et un transducteur électromécanique (2) étant aptes à être couplés à un support (4), le procédé comprenant les étapes consistant à:

   - appliquer un signal électrique (Vin) à une première amplitude aux bornes du transducteur électromécanique (2), et déterminer un premier ensemble de valeurs (Mod1, Arg1) d'un paramètre caractéristique de l'impédance électrique du transducteur électromécanique (2) en réponse à l'application dudit signal électrique (Vin) (100) ;
   - appliquer ledit signal électrique à une deuxième amplitude aux bornes du transducteur électromécanique (2), et déterminer un deuxième ensemble de valeurs (Mod2, Arg2) du paramètre caractéristique de l'impédance (200) ;
   - mesurer un écart entre le premier ensemble de valeurs (Mod1, Arg1) et le deuxième ensemble de valeurs (Mod2, Arg2) (300) ;
   - déterminer un état du capteur (1) en fonction de l'écart entre le premier ensemble de valeurs (Mod1, Arg1) et le deuxième ensemble de valeurs (Mod2, Arg2) (400),

   la mesure de l'écart entre le premier ensemble de valeurs et le deuxième ensemble de valeurs comprenant la mesure d'un écart de fréquences entre les passages par une valeur de module d'impédance prédéfinie ou par une valeur d'argument d'impédance prédéfinie du premier ensemble de valeurs et du deuxième ensemble de valeurs.

2. Procédé selon la revendication 1, dans lequel le capteur (1) comprend au moins un entrefer (5, 6), l'étape de détermination d'un état du capteur (1) comprenant une détermination de la valeur d'entrefer, et dans lequel :

   - la valeur d'entrefer est considérée comme étant nulle si l'écart entre le premier ensemble de valeurs (Mod1, Arg1) et le deuxième ensemble de valeurs (Mod2, Arg2) est inférieur à une valeur d'écart prédéterminée ;
   - la valeur d'entrefer est considérée comme non nulle si l'écart entre le premier ensemble de valeurs (Mod1, Arg1) et le deuxième ensemble de valeurs (Mod2, Arg2) est supérieure à ladite valeur d'écart prédéterminée.

3. Procédé selon la revendication 1, dans lequel le capteur (1) comprend au moins un entrefer (5, 6), le procédé comprenant les étapes consistant à :

   - déterminer une première valeur (Mod1, Arg1) d'un paramètre caractéristique de l'impédance électrique du premier transducteur électromécanique (2), à la première amplitude,
   - déterminer une deuxième valeur (Mod2, Arg2) d'un paramètre caractéristique de l'impédance électrique du premier transducteur électromécanique (2), à la deuxième amplitude, la première valeur et la deuxième valeur étant telles que l'écart soit non nul,
   - appliquer le signal électrique à une troisième amplitude, la troisième amplitude étant comprise entre la première amplitude et la deuxième amplitude, et déterminer une troisième valeur (Mod3, Arg3) d'un paramètre caractéristique de l'impédance électrique du premier transducteur électromécanique (2), à la troisième amplitude,
   - déterminer la valeur d'entrefer en fonction de la première valeur, de la deuxième valeur, et de la troisième valeur.

4. Procédé de détermination du niveau de serrage de pièces mécaniques (8, 9) disposées entre une première tête de serrage (7) et une deuxième tête de serrage (10), un capteur (1) dont le comportement mécanique est non linéaire en fonction de l'amplitude de la pression exercée contre ledit capteur (1) étant disposé entre les têtes de serrage (7, 10), un transducteur électromécanique (2) étant apte à être couplés à une des têtes de serrage, le procédé comprenant les étapes consistant à:

   - appliquer un signal électrique (Vin) à une première amplitude aux bornes du transducteur électromécanique (2), et déterminer un premier ensemble de valeurs (Mod1, Arg1) d'un paramètre caractéristique de l'impédance électrique du transducteur électromécanique (2) en réponse à l'application dudit signal électrique (Vin) (100) ;
   - appliquer ledit signal électrique à une deuxième amplitude aux bornes du transducteur électromécanique (2), et déterminer un deuxième ensemble de valeurs (Mod2, Arg2) du paramètre caractéristique de l'impédance (200) ;

- mesurer un écart entre le premier ensemble de valeurs (Mod1, Arg1) et le deuxième ensemble de valeurs (Mod2, Arg2) (300) ;
- déterminer un niveau de serrage en fonction de l'écart entre le premier ensemble de valeurs (Mod1, Arg1) et le deuxième ensemble de valeurs (Mod2, Arg2) (400)

la mesure de l'écart entre le premier ensemble de valeurs et le deuxième ensemble de valeurs comprenant la mesure d'un écart de fréquences entre les passages par une valeur de module d'impédance prédéfinie ou par une valeur d'argument d'impédance prédéfinie du premier ensemble de valeurs et du deuxième ensemble de valeurs.

5. Procédé selon la revendication 4, dans lequel la première tête de serrage (7) est une tête de vis, la deuxième tête de serrage (10) est un écrou, et le capteur (1) est intégré dans une rondelle.

6. Système de détermination de l'état d'au moins un capteur (1) dont le comportement mécanique est non linéaire en fonction de l'amplitude de la pression exercée contre ledit capteur, ledit capteur (1) et un transducteur électromécanique (2) étant aptes à être couplés à un support (4), le système comprenant une unité de détermination d'état de capteur (12), l'unité de détermination d'état de capteur étant configurée pour :

- appliquer un signal électrique (Vin) à une première amplitude aux bornes du premier transducteur électromécanique (2), et déterminer un premier ensemble de valeurs (Mod1, Arg1) d'un paramètre caractéristique de l'impédance électrique du premier transducteur électromécanique (2) en réponse à l'application dudit signal électrique (Vin) (100) ;
- appliquer ledit signal électrique à une deuxième amplitude aux bornes du premier transducteur électromécanique (2), et déterminer un deuxième ensemble de valeurs (Mod2, Arg2) du paramètre caractéristique de l'impédance (200) ;
- mesurer un écart entre le premier ensemble de valeurs (Mod1, Arg1) et le deuxième ensemble de valeurs (Mod2, Arg2) (300) ;
- déterminer un état du capteur (1) en fonction de l'écart entre le premier ensemble de valeurs (Mod1, Arg1) et le deuxième ensemble de valeurs (Mod2, Arg2) (400),

la mesure de l'écart entre le premier ensemble de valeurs et le deuxième ensemble de valeurs comprenant la mesure d'un écart de fréquences entre les passages par une valeur de module d'impédance prédéfinie ou par une valeur d'argument d'impédance prédéfinie du premier ensemble de valeurs et du deuxième ensemble de valeurs.

7. Système selon la revendication 6, dans lequel le capteur (1) comprend au moins un entrefer (5).

8. Système selon la revendication 7, dans lequel ledit au moins un entrefer est réalisé sous forme de motif répété disjoint (23, 24).

9. Système selon l'une des revendications 6 à 8, dans lequel le capteur (1) comprend un premier entrefer (13, 15) et un deuxième entrefer (14, 16), le premier entrefer (13, 15) et le deuxième entrefer (14, 16) ayant tous deux un profil rectiligne ou un profil incurvé, le premier entrefer (13, 15) et le deuxième entrefer (14, 16) étant superposés, le premier entrefer (13, 15) et le deuxième entrefer (14, 16) comprenant des espacements inter-plaques différents.

10. Système selon l'une des revendications 6 ou 7, dans lequel le capteur (1) comprend un premier entrefer (20) et un deuxième entrefer (21), le premier entrefer (20) et le deuxième entrefer (21) ayant tous deux un profil rectiligne, le premier entrefer (20) et le deuxième entrefer (21) étant alignés, le premier entrefer (20) et le deuxième entrefer (21) comprenant des espacements inter-plaques différents.

11. Système selon l'une des revendications 6 à 8, dans lequel le capteur (1) comprend un premier entrefer (17) et un deuxième entrefer (18), le premier entrefer (17) et le deuxième entrefer (18) ayant tous deux un profil rectiligne ou un profil incurvé, le premier entrefer (17) et le deuxième entrefer (18) étant superposés et suffisamment proches l'un par rapport à l'autre, de façon à ce que qu'ils forment une membrane dont l'épaisseur est inférieure à la longueur d'onde de l'onde acoustique se propageant dans le capteur.

12. Système selon l'une des revendications 6 ou 7, dans lequel le capteur (1) comprend un entrefer (19) ayant un profil dont l'épaisseur varie progressivement.

13. Système selon l'une des revendications 6 ou 7, dans lequel le capteur (1) comprend un entrefer (22) ayant un profil crénelé, la hauteur d'au moins une partie des créneaux étant variable.

14. Système selon la revendication 8, dans lequel le capteur (1) comprend un premier entrefer (25) et un deuxième entrefer (26), réalisés sous forme de motif répété, le premier entrefer (25) et le deuxième entrefer (26) étant superposés, le bord de chaque motif du premier entrefer (25) étant aligné avec le centre d'un motif du deuxième entrefer (26), et réciproquement.

15. Système selon la revendication 8, dans lequel le motif (28) comprend une partie d'entrefer rectiligne (27), apte à être mise en contact lorsqu'une pression est exercée contre le capteur, et deux piliers (29, 30) disposés de part et d'autre de la partie d'entrefer rectiligne (27), perpendiculaires à ladite partie d'entrefer.

16. Système selon l'une des revendications 6 à 15, dans lequel le capteur (1) est un capteur de force, ou une jauge de contrainte, ou un capteur de pression de gaz, ou un capteur de liquide, ou un capteur de température, ou un capteur d'humidité.

**Patentansprüche**

1. Verfahren zur Bestimmung des Zustands mindestens eines Sensors (1), dessen mechanisches Verhalten in Abhängigkeit von der Amplitude des gegen den Sensor ausgeübten Drucks nichtlinear ist, wobei der Sensor (1) und ein elektromechanischer Wandler (2) in der Lage sind, an eine Halterung (4) gekoppelt zu werden, wobei das Verfahren die folgenden Schritte umfasst:

   - Anlegen eines elektrischen Signals (Vin) mit einer ersten Amplitude an die Anschlüsse des elektromechanischen Wandlers (2), und Bestimmen eines ersten Satzes von Werten (Mod1, Arg1) eines Parameters, der für die elektrische Impedanz des elektromechanischen Wandlers (2) charakteristisch ist, als Reaktion auf das Anlegen des elektrischen Signals (Vin) (100);
   - Anlegen des elektrischen Signals mit einer zweiten Amplitude an die Anschlüsse des elektromechanischen Wandlers (2), und Bestimmen eines zweiten Satzes von Werten (Mod2, Arg2) des für die Impedanz charakteristischen Parameters (200);
   - Messen einer Abweichung zwischen dem ersten Satz von Werten (Mod1, Arg1) und dem zweiten Satz von Werten (Mod2, Arg2) (300);
   - Bestimmen eines Zustands des Sensors (1) in Abhängigkeit von der Abweichung zwischen dem ersten Satz von Werten (Mod1, Arg1) und dem zweiten Satz von Werten (Mod2, Arg2) (400),

   wobei das Messen der Abweichung zwischen dem ersten Satz von Werten und dem zweiten Satz von Werten das Messen einer Frequenzabweichung zwischen den Durchgängen durch einen vordefinierten Impedanzmodulwert oder durch einen vordefinierten Impedanzargumentwert des ersten Satzes von Werten und des zweiten Satzes von Werten umfasst.

2. Verfahren nach Anspruch 1, wobei der Sensor (1) mindestens einen Luftspalt (5, 6) umfasst, wobei der Schritt des Bestimmens eines Zustands des Sensors (1) eine Bestimmung des Luftspaltwerts umfasst, und wobei:

   - der Luftspaltwert als Null angesehen wird, wenn die Abweichung zwischen dem ersten Satz von Werten (Mod1, Arg1) und dem zweiten Satz von Werten (Mod2, Arg2) kleiner als ein vorbestimmter Abweichungswert ist;
   - der Luftspaltwert als nicht null betrachtet wird, wenn die Abweichung zwischen dem ersten Satz von Werten (Mod1, Arg1) und dem zweiten Satz von Werten (Mod2, Arg2) größer als der vorbestimmte Abweichungswert ist.

3. Verfahren nach Anspruch 1, wobei der Sensor (1) mindestens einen Luftspalt (5, 6) umfasst, wobei das Verfahren die folgenden Schritte umfasst:

   - Bestimmen eines ersten Werts (Mod1, Arg1) eines Parameters, der für die elektrische Impedanz des ersten elektromechanischen Wandlers (2) charakteristisch ist, bei der ersten Amplitude,
   - Bestimmen eines zweiten Werts (Mod2, Arg2) eines Parameters der für die elektrische Impedanz des ersten elektromechanischen Wandlers (2) charakteristisch ist, bei der zweiten Amplitude, wobei der erste Wert und der zweite Wert so sind, dass die Abweichung ungleich Null ist,
   - Anlegen des elektrischen Signals bei einer dritten Amplitude, wobei die dritte Amplitude zwischen der ersten Amplitude und der zweiten Amplitude liegt, und Bestimmen eines dritten Wertes (Mod3, Arg3) eines Parameters, der für die elektrische Impedanz des ersten elektromechanischen Wandlers (2) charakteristisch ist, bei der dritten Amplitude,
- Bestimmen des Werts des Luftspalts in Abhängigkeit von dem ersten Wert, dem zweiten Wert und dem dritten Wert.

4. Verfahren zur Bestimmung des Klemmlevels von mechanischen Teilen (8, 9), die zwischen einem ersten Klemmkopf (7) und einem zweiten Klemmkopf (10) angeordnet sind, wobei ein Sensor (1), dessen mechanisches Verhalten in Abhängigkeit von der Größe des auf den Sensor (1) ausgeübten Drucks nichtlinear ist, zwischen den Klemmköpfen (7, 10) angeordnet ist, wobei ein elektromechanischer Wandler (2) in der Lage ist, mit einem der Klemmköpfe gekoppelt zu werden, wobei das Verfahren die folgenden Schritte umfasst:

- Anlegen eines elektrischen Signals (Vin) mit einer ersten Amplitude an die Anschlüsse des elektromechanischen Wandlers (2), und Bestimmen eines ersten Satzes von Werten (Mod1, Arg1) eines Parameters, der für die elektrische Impedanz des elektromechanischen Wandlers (2) charakteristisch ist, als Reaktion auf das Anlegen des elektrischen Signals (Vin) (100);
- Anlegen des elektrischen Signals mit einer zweiten Amplitude an die Anschlüsse des elektromechanischen Wandlers (2), und Bestimmen eines zweiten Satzes von Werten (Mod2, Arg2) des für die Impedanz charakteristischen Parameters (200);
- Messen einer Abweichung zwischen dem ersten Satz von Werten (Mod1, Arg1) und dem zweiten Satz von Werten (Mod2, Arg2) (300);
- Bestimmen eines Klemmlevels in Abhängigkeit von der Abweichung zwischen dem ersten Satz von Werten (Mod1, Arg1) und dem zweiten Satz von Werten (Mod2, Arg2) (400).

wobei das Messen der Abweichung zwischen dem ersten Satz von Werten und dem zweiten Satz von Werten das Messen einer Frequenzabweichung zwischen den Durchgängen durch einen vordefinierten Impedanzmodulwert oder durch einen vordefinierten Impedanzargumentwert des ersten Satzes von Werten und des zweiten Satzes von Werten umfasst.

5. Verfahren nach Anspruch 4, wobei der erste Klemmkopf (7) ein Schraubenkopf ist, der zweite Klemmkopf (10) eine Mutter ist und der Sensor (1) in eine Unterlegscheibe integriert ist.

6. System zur Bestimmung des Zustands mindestens eines Sensors (1), dessen mechanisches Verhalten in Abhängigkeit von der Größe des gegen den Sensor ausgeübten Drucks nichtlinear ist, wobei der Sensor (1) und ein elektromechanischer Wandler (2) in der Lage sind, an eine Halterung (4) gekoppelt zu werden, wobei das System eine Sensorzustandsbestimmungseinheit (12) umfasst, wobei die Sensorzustandsbestimmungseinheit zu Folgendem konfiguriert ist:

- Anlegen eines elektrischen Signals (Vin) mit einer ersten Amplitude an die Anschlüsse des ersten elektromechanischen Wandlers (2), und Bestimmen eines ersten Satzes von Werten (Mod1, Arg1) eines Parameters, der für die elektrische Impedanz des ersten elektromechanischen Wandlers (2) charakteristisch ist, als Reaktion auf das Anlegen des elektrischen Signals (Vin) (100);
- Anlegen des elektrischen Signals mit einer zweiten Amplitude an die Anschlüsse des ersten elektromechanischen Wandlers (2), und Bestimmen eines zweiten Satzes von Werten (Mod2, Arg2) des für die Impedanz charakteristischen Parameters (200);
- Messen einer Abweichung zwischen dem ersten Satz von Werten (Mod1, Arg1) und dem zweiten Satz von Werten (Mod2, Arg2) (300);
- Bestimmen eines Zustands des Sensors (1) in Abhängigkeit von der Abweichung zwischen dem ersten Satz von Werten (Mod1, Arg1) und dem zweiten Satz von Werten (Mod2, Arg2) (400),

wobei das Messen der Abweichung zwischen dem ersten Satz von Werten und dem zweiten Satz von Werten das Messen einer Frequenzabweichung zwischen den Durchgängen durch einen vordefinierten Impedanzmodulwert oder durch einen vordefinierten Impedanzargumentwert des ersten Satzes von Werten und des zweiten Satzes von Werten umfasst.

7. System nach Anspruch 6, wobei der Sensor (1) mindestens einen Luftspalt (5) umfasst.

8. System nach Anspruch 7, wobei der mindestens eine Luftspalt als unzusammenhängendes, sich wiederholendes Muster (23, 24) gebildet ist.

**9.** System nach einem der Ansprüche 6 bis 8, wobei der Sensor (1) einen ersten Luftspalt (13, 15) und einen zweiten Luftspalt (14, 16) umfasst, wobei der erste Luftspalt (13, 15) und der zweite Luftspalt (14, 16) beide ein geradliniges Profil oder ein gekrümmtes Profil aufweisen, wobei der erste Luftspalt (13, 15) und der zweite Luftspalt (14, 16) übereinander angeordnet sind, wobei der erste Luftspalt (13, 15) und der zweite Luftspalt (14, 16) unterschiedliche Zwischenplattenabstände umfassen.

**10.** System nach einem der Ansprüche 6 oder 7, wobei der Sensor (1) einen ersten Luftspalt (20) und einen zweiten Luftspalt (21) umfasst, wobei der erste Luftspalt (20) und der zweite Luftspalt (21) beide ein geradliniges Profil aufweisen, wobei der erste Luftspalt (20) und der zweite Luftspalt (21) ausgefluchtet sind, wobei der erste Luftspalt (20) und der zweite Luftspalt (21) unterschiedliche Zwischenplattenabstände umfassen.

**11.** System nach einem der Ansprüche 6 bis 8, wobei der Sensor (1) einen ersten Luftspalt (17) und einen zweiten Luftspalt (18) umfasst, wobei der erste Luftspalt (17) und der zweite Luftspalt (18) beide ein geradliniges Profil oder ein gekrümmtes Profil haben, wobei der erste Luftspalt (17) und der zweite Luftspalt (18) übereinander liegen und ausreichend nahe beieinander liegen, so dass sie eine Membran bilden, deren Dicke kleiner als die Wellenlänge der sich im Sensor ausbreitenden akustischen Welle ist.

**12.** System nach einem der Ansprüche 6 oder 7, wobei der Sensor (1) einen Luftspalt (19) mit einem Profil umfasst, dessen Dicke sich allmählich ändert.

**13.** System nach einem der Ansprüche 6 oder 7, wobei der Sensor (1) einen Luftspalt (22) mit einem gezackten Profil umfasst, wobei die Höhe mindestens eines Teils der Zacken variabel ist.

**14.** System nach Anspruch 8, wobei der Sensor (1) einen ersten Luftspalt (25) und einen zweiten Luftspalt (26) umfasst, die als sich wiederholendes Muster ausgebildet sind, wobei der erste Luftspalt (25) und der zweite Luftspalt (26) übereinander liegen, wobei die Kante jedes Musters des ersten Luftspalts (25) mit der Mitte eines Musters des zweiten Luftspalts (26) ausgefluchtet ist, und umgekehrt.

**15.** System nach Anspruch 8, wobei das Muster (28) einen geradlinigen Luftspaltteil (27) umfasst, der in Lage ist, in Kontakt gebracht zu werden, wenn Druck gegen den Sensor ausgeübt wird, und zwei Säulen (29, 30), die auf beiden Seiten des geradlinigen Luftspaltteils (27) angeordnet sind und senkrecht zu dem Luftspaltteil stehen.

**16.** System nach einem der Ansprüche 6 bis 15, wobei der Sensor (1) ein Kraftsensor oder ein Dehnungsmesser oder ein Gasdrucksensor oder ein Flüssigkeitssensor oder ein Temperatursensor oder ein Feuchtigkeitssensor ist.

**Claims**

**1.** Method for determining the state of at least one sensor (1) whose mechanical behaviour is nonlinear as a function of the amplitude of the pressure exerted against said sensor, said sensor (1) and an electromechanical transducer (2) being able to be coupled to a support (4), the method comprising the steps of

- applying an electrical signal (Vin) at a first amplitude to the terminals of the electromechanical transducer (2), and determining a first set of values (Mod1, Arg1) of a parameter characteristic of the electrical impedance of the electromechanical transducer (2) in response to the application of said electrical signal (Vin) (100);
- applying said electrical signal at a second amplitude to the terminals of the electromechanical transducer (2), and determining a second set of values (Mod2, Arg2) of the parameter characteristic of the impedance (200);
- measuring a deviation between the first set of values (Mod1, Arg1) and the second set of values (Mod2, Arg2) (300);
- determining a state of the sensor (1) as a function of the deviation between the first set of values (Mod1, Arg1) and the second set of values (Mod2, Arg2) (400),

the measuring of the deviation between the first set of values and the second set of values comprising the measuring of a deviation of frequencies between the passages by one predefined impedance module value or by one predefined impedance argument value of the first set of values and of the second set of values.

**2.** Method according to claim 1, wherein the sensor (1) comprises at least one air gap (5, 6), the step of determining a state of the sensor (1) comprising a determination of the air gap value, and wherein:

- the air gap value is considered to be nil if the deviation between the first set of values (Mod1, Arg1) and the second set of values (Mod2, Arg2) is lower than a predetermined deviation value;
- the air gap value is considered to be non-zero if the deviation between the first set of values (Mod1, Arg1) and the second set of values (Mod2, Arg2) is above said predetermined deviation value.

3. Method according to claim 1, wherein the sensor (1) comprises at least one air gap (5, 6), the method comprising the steps of

- determining a first value (Mod1, Arg1) of a parameter characteristic of the electrical impedance of the first electromechanical transducer (2), at the first amplitude,
- determining a second value (Mod2, Arg2) of a parameter characteristic of the electrical impedance of the first electromechanical transducer (2), at the second amplitude, the first value and the second value being such that the deviation is non-zero,
- applying the electrical signal at a third amplitude, the third amplitude ranging between the first amplitude and the second amplitude, and determining a third value (Mod3, Arg3) of a parameter characteristic of the electrical impedance of the first electromechanical transducer (2), at the third amplitude,
- determining the air gap value as a function of the first value, of the second value, and of the third value.

4. Method for determining the level of clamping of mechanical parts (8, 9) disposed between a first clamping head (7) and a second clamping head (10), a sensor (1) whose mechanical behaviour is nonlinear as a function of the amplitude of the pressure exerted against said sensor (1) being disposed between the clamping heads (7, 10), an electromechanical transducer (2) being able to be coupled to one of the clamping heads, the method comprising the steps of

- applying an electrical signal (Vin) at a first amplitude to the terminals of the electromechanical transducer (2), and determining a first set of values (Mod1, Arg1) of a parameter characteristic of the electrical impedance of the electromechanical transducer (2) in response to the application of said electrical signal (Vin) (100);
- applying said electrical signal at a second amplitude to the terminals of the electromechanical transducer (2), and determining a second set of values (Mod2, Arg2) of the parameter characteristic of the impedance (200);
- measuring a deviation between the first set of values (Mod1, Arg1) and the second set of values (Mod2, Arg2) (300);
- determining a clamping level as a function of the deviation between the first set of values (Mod1, Arg1) and the second set of values (Mod2, Arg2) (400),

the measuring of the deviation between the first set of values and the second set of values comprising the measuring of a deviation of frequencies between the passages by one predefined impedance module value or by one predefined impedance argument value of the first set of values and of the second set of values.

5. Method according to claim 4, wherein the first clamping head (7) is a screwhead, the second clamping head (10) is a nut, and the sensor (1) is incorporated in a washer.

6. System for determining the state of at least one sensor (1) whose mechanical behaviour is nonlinear as a function of the amplitude of the pressure exerted against said sensor, said sensor (1) and an electromechanical transducer (2) being able to be coupled to a support (4), the system comprising a sensor state determination unit (12), the sensor state determination unit being configured to:

- apply an electrical signal (Vin) at a first amplitude to the terminals of the first electromechanical transducer (2), and determine a first set of values (Mod1, Arg1) of a parameter characteristic of the electrical impedance of the first electromechanical transducer (2) in response to the application of said electrical signal (Vin) (100);
- apply said electrical signal at a second amplitude to the terminals of the first electromechanical transducer (2), and determine a second set of values (Mod2, Arg2) of the parameter characteristic of the impedance (200);
- measure a deviation between the first set of values (Mod1, Arg1) and the second set of values (Mod2, Arg2) (300);
- determine a state of the sensor (1) as a function of the deviation between the first set of values (Mod1, Arg1) and the second set of values (Mod2, Arg2) (400),

the measuring of the deviation between the first set of values and the second set of values comprising the measuring of a deviation of frequencies between the passages by one predefined impedance module value or by one predefined impedance argument value of the first set of values and of the second set of values.

7. System according to claim 6, wherein the sensor (1) comprises at least one air gap (5).

8. System according to claim 7, wherein said at least one air gap is produced in the form of a disjointed repeated pattern (23, 24).

9. System according to one of claims 6 to 8, wherein the sensor (1) comprises a first air gap (13, 15) and a second air gap (14, 16), the first air gap (13, 15) and the second air gap (14, 16) both having a rectilinear profile or a dished profile, the first air gap (13, 15) and the second air gap (14, 16) being superposed, the first air gap (13, 15) and the second air gap (14, 16) comprising different inter-plate spacings.

10. System according to one of claims 6 or 7, wherein the sensor (1) comprises a first air gap (20) and a second air gap (21), the first air gap (20) and the second air gap (21) both having a rectilinear profile, the first air gap (20) and the second air gap (21) being aligned, the first air gap (20) and the second air gap (21) comprising different inter-plate spacings.

11. System according to one of claims 6 to 8, wherein the sensor (1) comprises a first air gap (17) and a second air gap (18), the first air gap (17) and the second air gap (18) both having a rectilinear profile or a dished profile, the first air gap (17) and the second air gap (18) being superposed and sufficiently close to one another, such that they form a diaphragm, whose thickness is less than the wavelength of the acoustic wave being propagated in the sensor.

12. System according to one of claims 6 or 7, wherein the sensor (1) comprises an air gap (19) having a profile whose thickness varies progressively.

13. System according to one of claims 6 or 7, wherein the sensor (1) comprises an air gap (22) having a serrated profile, the height of at least some of the serrations being variable.

14. System according to claim 8, wherein the sensor (1) comprises a first air gap (25) and a second air gap (26), produced in the form of a repeated pattern, the first air gap (25) and the second air gap (26) being superposed, the edge of each pattern of the first air gap (25) being aligned with the centre of a pattern of the second air gap (26), and vice versa.

15. System according to claim 8, wherein the pattern (28) comprises a rectilinear air gap part (27), that can be brought into contact when a pressure is exerted against the sensor, and two pillars (29, 30) disposed on either side of the rectilinear air gap part (27), perpendicular to said air gap part.

16. System according to one of claims 6 to 15, wherein the sensor (1) is a force sensor, or a strain gauge, or a gas pressure sensor, or a liquid sensor, or a temperature sensor, or a humidity sensor.

FIG.1

FIG.2

FIG.3

EP 4 202 387 B1

FIG.4

EP 4 202 387 B1

FIG.5

FIG.6

FIG.7

FIG.8

FIG.9

FIG.10

FIG.11

FIG.12

FIG.13

FIG.14

**RÉFÉRENCES CITÉES DANS LA DESCRIPTION**

**Documents brevets cités dans la description**

- US 5594705 A
- US 2010010750 A1
- FR 2739925 A1
- US 4604898 A
- US 2011132098 A1
- FR 2771506 A1

**Littérature non-brevet citée dans la description**

- **MICHAL SZERMER et al.** A Capacitive 3-Axis MEMS Accelerometer for Medipost: A Portable System Dedicated to Monitoring Imbalance Disorders. *Sensors,* 2021, vol. 21, 3564